(19) **Europäisches Patentamt**

**European Patent Office**

**Office européen des brevets**

(11) **EP 1 340 430 A1**

(12) # EUROPEAN PATENT APPLICATION

(43) Date of publication:
**03.09.2003 Bulletin 2003/36**

(51) Int Cl.7: **A23L 1/2165**, A23L 1/212,
A23L 1/164, A23L 1/0522

(21) Application number: **03290363.5**

(22) Date of filing: **14.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **27.02.2002 FR 0202492**

(71) Applicants:
• **Intersnack Knabber- Gebäck GmbH & Co. KG
50858 Köln (DE)**
• **Bioval
02130 Saponay (FR)**

(72) Inventors:
• **Rousset, Gérard
91320 Wissous (FR)**
• **Tricoit, Jean
02200 Soissons (FR)**

(74) Representative: **Bernasconi, Jean Raymond et al
c/o Cabinet Lavoix,
2, Place d'Estienne d'Orves
75441 Paris Cedex 09 (FR)**

(54) **Starch-based dehydrated flakes comprising 0,05% glycolipid(s)**

(57) The invention relates to starch-based dehydrated flakes comprising 0,05% glycolipid(s) which, when reconstituted, are similar in quality, taste and texture to freshly prepared mashed material.

**Description**

The present invention relates to a method for processing a starch-based material in a manner to produce dehydrated flakes which when reconstituted are similar in quality, taste and texture to freshly prepared mashed material. In a preferred embodiment, the starch-based material according to the invention is potato.

Numerous processes for processing potatoes to produce potato flakes have been described. The ultimate goal of such processes, of course, is to have a product which has qualities as close as possible to those of freshly prepared potatoes in order to achieve as high as possible consumer acceptance for the product. Typical examples of such processes are those disclosed in U.S. Pat. Nos. 2,759,832, 2,780,552 and 2,787,553. A typical prior art process involves first washing the potatoes and optionally peeling them after the washing step. After this, the potatoes are sliced, blanched, cooled and steam cooked. After the cooking, the potatoes are riced and, if not peeled before this step, can be peeled during the ricing step as, for example, by an apparatus disclosed in U.S. Pat. No. 3,862,345. After ricing, the processed potatoes have additives for prevention of various modes of failure added thereto and are subsequently flaked and cooled. After cooling, flavoring can be added to the flaked potatoes prior to packaging the thus prepared dehydrated potato flakes for storage, shipment and distribution to the ultimate consumer.

The problem with such processes, as have been practiced in the past, is that of simultaneously achieving both taste and texture qualities of freshly prepared mashed potatoes. The above-described process will provide a potato flake product which has acceptable but less than optimal texture and taste qualities. Some processes are known which will provide an acceptable product as far as taste is concerned, but the product is unacceptable as far as texture is concerned in that the reconstituted product has a pasty consistency, which is objectionable to consumers.

In the prior art, in order to achieve a product which is acceptable in taste, processes are sometimes used which result in a product which when reconstituted has a pasty texture and is, therefore, unacceptable to the ultimate consumer. The pastiness is due to the disruption of individual potato flesh cells, which allows gelatinized starch to be present in a free form throughout the potato mass. This is often the result of using certain cooking approaches (such as straight steam cooking) which are practiced to produce an acceptable taste.

In preparing a product which when reconstituted would provide an acceptable texture, the taste was objectionable because during processing the steps of blanching and cooking are required for achieving the correct texture. These steps result in leaching and various aqueous phase reactions which degrade the taste quality of the reconstituted product.

In the prior art, one method of achieving better qualities in a product having acceptable texture and taste properties was by the addition of additives to the product, such as an emulsifier. Indeed, when referring to mashed potatos, the potato pieces/slabs are riced after the cooking step by forcing the potato pieces through a slotted plate. Care must be taken not to break the cell structure. Generally, at least about 0.1% emulsifier is added to the wet mash or cooked potatoes as a processing aid. Higher levels of up to about 3% of an emulsifier can also be added, if needed, to complex the amylose if the resulting mash is too sticky (e.g., too many broken cells due to overcooking). In the prior art, emulsifiers do not originate from vegetable material but are rather chemically produced. Examples of emulsifier are distilled monoglyceride, diglyceride of partially hydrogenated soybean oil, lactyl esters, lecithin, or a propylene glycol derivative. However, in view of current consumer sentiment, the addition of chemical additives is objectionable if it can be avoided. Thus, it would be highly desirable to provide a product which would not require the addition of a chemical additive in order to have an acceptable taste and texture product.

The present invention notably relies on the observation that in potato processing, the cleaning, optional peeling, and slicing steps generate washing waters that contain about 80% polar lipids (triglycerides, phospholipids, glycolipids and sphingolipids) that originate from the starting material. In the processes according to the prior art, these washing waters are discarded. Potentially advantageous components, depleted from the potatoes, are thus wasted.

The inventors have shown that glycolipids, and in particular di/tri-galactoglycerides, have higher amylose complexing potency as compared to conventional emulsifiers used in food processing.

It is thus particularly advantageous from the industrial point of view, as well as for the consumer, to recover glycolipids from the waste water for use as vegetable-derived inexpensive emulsifiers.

Throughout the present patent application, percentages are expressed as a weight ratio relative to the weight of the dry product.

The present invention thus provides starch based dehydrated flakes enriched with at least 0.05% in weight of a vegetable derived glycolipid. Preferentially, said glycolipid is added in an amount of 0.1%-0.2%. However, one skilled in the art can readily determine the useful quantity of glycolipid required to achieve complete starch complexing. The level of starch complexing is indicated by the measurement of the Amylose Complexing Index (ACI), as hereafter described.

The glycolipid according to the invention can replace conventional emulsifier generally used in dehydrated flake production. The dehydrated flakes according to the invention, when reconstituted, are similar in quality, taste and texture to freshly prepared mashed material. Furthermore, the dehydrated flakes advantageously display enhanced hydrophilic and stability properties.

As used herein, the term *"glycolipid"* denotes lipids that are based on glycerol (*i.e.* glycerolipids) and that contain a sugar constituent. Glycolipids thus correspond to the so called glycosylglycerides or glycoglycerolipids. The terms *"digalactoglyceride"* and *"trigalactoglyceride"* are meant for digalactosyldiacylglycerol and trigalactosyldiacylglycerol, respectively. The structures and nomenclatures of glycolipids are reviewed in "Handbook of lipid research: glycolipids, phosphoglycolipids and sulfoglycolipids", Ed Morris Kates, Plenum Press, incorporated herein by reference.

Preferably, the vegetable derived glycolipid originates from a starch-based material. General sources of glycolipids are higher plant leaves such as spinach, runner bean, red clove, alfalfa, potato, lettuce and cabbage; fruits such as cucumber, green pepper or pumpkin; apples; tubers, bulbs and roots such as potato, yam, parsnip, sweet potato; tulip, narcissus and daffodil bulbs, or oat root; seeds such as *Briza spitica,* millet, azuka beans, wheat; rice bran; or corn.

In the context of the present invention, at least one glycolipid can be used for starch complexing. Preferably, said glycolipid is di/tri-galactoglyceride. The invention can also be carried out using a mixture of glycolipids, for instance when said glycolipids originate from a vegetable.

As used herein "starch-based material" refers to naturally occuring, highly polymeric carbohydrates composed of glucopyranose units, in either natural or dehydrated (e.g., flakes, granules, or flour form). The starch-based materials include, but are not limited to, potato, corn, rice, oat, beans, barley, tapioca, wheat, as well as potato flour, mashed potato powder starch, corn starch, masa corn flour, corn bran, corn meal, rice flour, tapioca, buckwheat flour, rice flour, oat flour, bean flour, barley flour, but also modified starches, native starches, and dehydrated starches, starches derived from tubers, vegetables and grain, for example corn starch, wheat starch, rice starch, waxy corn starch, oat starch, cavassa starch, waxy barley, waxy rice starch, glutinous rice starch, sweet rice starch, amioca, potato starch, tapioca starch, corn starch, oat starch, cassava starch, and mixtures thereof.

In a preferred embodiment the starch-based material is potato. Accordingly, the dehydrated flake is preferably a dehydrated potato flake. Any commercially available potato used to prepare flakes can be used to prepare the dehydrated flakes of the present invention. Preferably, the flakes are prepared from potatoes such as, but not limited to, Kennebec, Russet Burbank, Idaho Russet, Sebago, Bentgie, Aurora, Saturna, Mentor, Producent, Oliva and Felsina. Raw or pre-conditioned potato slices, nubbins and slivers or mixtures thereof can be used in the practice of the present invention. The potato flakes can be made using standard potato flake-making equipment, such as a twin or single screw cooker.

Generally, an emulsifier is present in the flake because of its use as a processing aid to prevent the starch-based material, and in particular the potato mash, from sticking to the roller during drying and flaking. Therefore, low levels of emulsifiers are present in the flake. Typically the emulsifier is present in the flake at a level of from 0.1% to 1%. Preferably, the emulsifier is present in the flake at a level of from about 0.1 % to about 0.5%, more preferably at about 0.2% to about 0.4%. Higher levels of emulsifiers can be present, for example, if the potatoes are overcooked and high levels of amylose are present in the potato mash. In these instances, the emulsifier may be present in a level as high as 3%. If the potato has been undercooked, the addition of emulsifiers will not correct the texture of the undercooked mash because of the large amount of raw starch.

To further enhance the taste quality of the product, the dehydrated flake according to the invention can additionally comprise potato flavour and/or potato granules.

The dehydrated flakes when rehydrated provide a purée with enhanced gustative and texture properties. The dehydrated flakes can further be used for the preparation of foodstuffs such as snacks, or ice-creams, for instance.

In another aspect, the invention relates to the use of a glycolipid as an amylose complexing agent. Preferably, said glycolipid is a vegetable derived glycolipid. The amylose complexing potency is readily assessed by one skilled in the art through calculating the Amylose Complexing Index (ACI), as described in the following examples. Preferably said glycolipid is di/tri-galactoglyceride. An amylose complexing glycolipid can advantageously be used in the context of food production for starch containing foodstuffs, such as snacks, ice-creams, or dairy products for instance.

In a particular embodiment, the amylose complexing glycolipid is recovered from the cleaning, slicing, or transport water used during vegetable processing. Methods of purification of water soluble glycolipids from an aqueous solution are as well known to one skilled in the art. A method such as the one described in the following examples can notably be used.

The invention further provides a method of producing starch based dehydrated flakes from a starch based material wherein an emulsifier comprising a vegetable derived glycolipid is added. Preferably the glycolipid emulsifier is di/tri-galactoglyceride.

In particular, the method of producing starch based dehydrated flakes from a starch based material includes:

- cleaning and, if necessary, peeling a vegetable containing starch,
- optionally slicing and/or blanching and cooling said washed vegetable,
- cooking said washed and optionally sliced and blanched vegetable in an amount sufficient to permit ricing,

- ricing the thus cooked vegetable and

- dehydrating and flaking the so obtained wet vegetable mash,

wherein a vegetable derived glycolipid is added prior to the flaking operation. Preferably, a vegetable derived glycolipid is added during the cooking and/or the ricing operations, or between the cooking and the ricing operations. The glycolipid is added in a proportion of at least 0.5% by weight relative to the weight of dehydrated flakes, and preferably in a proportion of about 0.1 % to 0.2%

A particular advantage of glycolipids is their capacity to achieve amylose complexing even at low temperature. Such a property can advantageously be used to incorporate the glycolipid in dehydrated flakes, such as the prior art flakes, when product analysis shows an unsatisfactory complexed amylose proportion.

In a particular aspect of the invention, the vegetable derived glycolipid is recovered from the cleaning or transport water used during vegetable processing. Preferably the vegetable processing is a method of producing starch based dehydrated flakes. The corresponding method thus provides a process which uses glycolipids recovered generally from waste water for use as inexpensive emulsifiers of natural origin.

The vegetable derived glycolipid to be added can optionally be mixed with phospholipid derivatives. Indeed, phospholipids can also be recovered together with glycolipids from the waste waters generated for instance by a method such as described above.

In the method of producing starch based dehydrated flakes according to the invention, advantageously at least about 0.05% (weight/weight ratio of dehydrated product) of vegetable derived glycolipid is added to the vegetable material before the flaking operation. Preferentially, said glycolipid is added in an amount of 0.1 %-0.2%.

Additional ingredients can also be added to the wet mash to improve the storage stability of the dehydrated potato flakes. Various stabilizers and preservatives are usually employed to improve the stability and texture of the resulting flakes. For example, from 150 to 200 parts per million (p.p.m.) of sulfite are provided in the dry product. This is usually added to the wet mash before dehydration as dry sodium sulfite and sodium bisulfite and protects the flakes from darkening during processing and subsequent storage. Antioxidants such as BHA (2 and 3-tert-butyl-4-hydroxyanisole) and BHT (3,5-di-tert-butyl-4-hydroxytoluene) are added in an amount up to a total of about 10 p.p.m. to prevent oxidative deterioration. Citric acid is generally added in a quantity sufficient to give about 90 p.p.m. in the dehydrated product to prevent discoloration caused by the presence of ferrous ions. Ascorbic acid can also be added to guarantee the initial level of vitamins.

The following figure and examples are provided to illustrate the present invention but do not limit the scope of the invention.

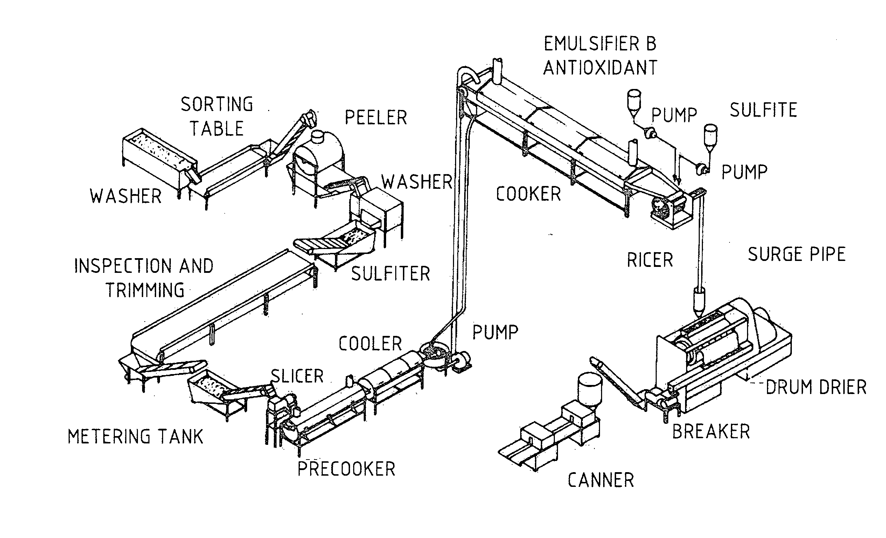

Figure 1: This figure illustrates the succession of steps that may be involved in a process allowing production of dehydrated flakes from a starch-based material, potato for instance.

Examples

1) Analytical methods

*Water Absorption Index (WAI)*

In general, the terms "Water Absorption Index" and "WAI" refer to the measurement of the water-holding capacity of any carbohydrate based material as a result of a cooking process. (See for example Anderson, R. A., Conway, H. F., Pfeifer, V. F. and Griffin, Jr., E. L., 1969, Gelatinization of Corn Grits By Roll- and Extrusion-Cooking. CEREAL SCIENCE TODAY; 14(1):4). The cooking and dehydration of potato flakes introduce changes in the potato cell physiology which affects the cells rehydration properties, specifically their water-holding capacity. This measurement is typically expressed as the ratio of mass of water held per unit mass of material.

The WAI for a sample is determined by the following procedure: the weight to two decimal places of an empty centrifuge tube is determined. Two grams of dry sample (e.g., potato flakes) are placed into the tube. Thirty milliliters of water are added to the tube. The water and sample are stirred vigorously to insure no dry lumps remain. The tube is placed in a 30°C water bath for 30 minutes, repeating the stirring procedure at 10 and 20 minutes. The tube is then centrifuged for 15 minutes at 3,000 rpm. The water is then decanted from the tube, leaving a gel behind. The tube and contents are weighed. The WAI is calculated by dividing the weight of the resulting gel by the weight of the dry sample (i.e., [weight of tube and gel]-[weight of tube] divided by [weight of dry flakes]).

*Amylose Complexing Index (ACI)*

This method is designed to measure the percentage of amylose that has formed an insoluble complex with a glycolipid.

Pure amylose (Sigma Chemical Co, USA) isolated from potatoes is dissolved in a molar KOH solution at 5°C. When a clear solution has been obtained (0.5-2 h), the alkaline solution is neutralized with 0.1 M HCl and diluted with water to a final concentration of 100 mg amylose/100 ml. The fresh amylose solution is prepared just before reaction with monoglycerides and is used within 2 hours from preparation.

In a typical experiment, a monoglyceride (10 mg), in the form of a powder, aqueous dispersion or as liposomes, is reacted with amylose solution (40 ml) in an Erlenmeyer flask. The reaction is carried out in a water bath at 30 or 60°C, with moderate stirring, for exactly 30 min.

The precipitated complex is removed by filtration, and 2.0 ml of the clear filtrate are transferred to a 100 ml volumetric flask. Untreated amylose in the filtrate is determined by adding a 0.04 M tartrate buffer pH 4.0 (10 ml) and diluting with deionised water to a total volume of about 90 ml. One millilitre of an iodine solution ($I_2$, 2 g ; KI, 20 g ; deionised water, 1 litre) is then added to form the blue-coloured polyiodine complex with amylose. The mixture is shaken immediately then diluted to 100 ml with water.

The absorbance of the iodine-amylose complex is measured at 660 nm using an iodine solution of the same concentration as the blank. The amylose solution with non added monoglyceride served as the control.

The results are given as an amylose complexing index (ACI) according to the following relationship :

$$ACI = \frac{\text{absorbance of control-absorbance of sample}}{\text{absorbance of control}} \times 100$$

2) Results

*Purification of glycolipids from waste waters*

Glycolipids are extracted from potato peeling, slicing, or transport waters by adsorption on silica or on diatomaceous earth. One ton of diatomaceous earth allows the glycolipids contained in 100-200 thousand liters of waste water to be fixed. Afterwards, the glycolipids undergo alcoholic desorption (50% ethanol), optionally separation, and the alcoholic extract is further vacuum-concentrated and dehydrated so as to recover the glycolipids.

Separation can be achieved by any suitable techniques well known to one skilled in the art, such as chromatography or recrystallization.

*Glycolipid adjunction in the processing of dehydrated flakes*

At least one glycolipid is added in the emulsification solution that will be introduced in the ricer machine, as depicted in Figure 1.

For that, 18 kg of a dehydrated glycolipid powder are diluted in 400 l of cold water in a jacketed tank and the mixture is centrifuged at almost 1500-3000 rpm for 3 minutes, without heating, with a TURBO-MORITZ type shearinghead apparatus. 18 to 25 kg melted glycerol monostearate, about 4kg acidic sodium pyrophosphate, 0.5 to 2 kg citric acid, and 0.5 to 2 kg metabisulfite dissolved in 3 to 5 l of water, as well as ascorbic acid and an anti-oxidant such as BHA, are then added and stirred for 2 minutes.

The mixed ingredients are pumped into the ricer cylinder at a rate of 30 l/h for a small cylinder (1000 kg/h peeled potatoes corresponding to 180 kg/h dehydrated flakes), or 90 l/h for a large cylinder (3500 kg/h peeled potatoes corresponding to 660 kg/h dehydrated flakes), with a low speed stirring being maintained.

*Dehydrated flakes properties*

Analyses performed as described above in the "Analytical methods" section show that the flakes according to the invention have enhanced ACI and WAI indexes, the latter indicating improved hydrophilic properties.

Amylose complexing analysis shows that conventional dehydrated flakes, produced without adding glycolipid (s), have an ACI of between 800 and 1000, whereas the ACI of the dehydrated flakes according to the invention is about 100-200.

**Claims**

1. Starch based dehydrated flake enriched with at least 0.05% by weight of a vegetable derived glycolipid.

2. Dehydrated flake according to claim 1, wherein said glycolipid is a di/tri-galactoglyceride.

3. Dehydrated flake according to claim 1 or 2, wherein said glycolipid is from a starch based material.

4. Dehydrated flake according to any one of the preceding claims, consisting of a dehydrated potato flake.

5. Dehydrated flake according to any one of the preceding claims, wherein potato flavour and/or potato granules are included.

6. Use of a vegetable derived glycolipid as an amylose complexing agent.

7. Use according to claim 6, wherein said glycolipid is a di/tri-galactoglyceride.

8. Use according to claim 6 or 7, wherein said glycolipid is recovered from the cleaning or transport water used during vegetable processing.

9. A method of producing starch based dehydrated flakes from a starch based material, wherein an emulsifier comprising a vegetable derived glycolipid is added.

10. A method according to claim 9, said method including:

   - cleaning and, if necessary, peeling a vegetable containing strach,
   - optionally slicing and/or blanching and cooling said washed vegetable,
   - cooking said washed and optionally sliced and blanched vegetable in an amount sufficient to permit ricing,
   - ricing the thus cooked vegetable and
   - dehydrating and flaking the so obtained wet vegetable mash,

   wherein the vegetable derived glycolipid is added prior to the flaking operation.

11. A method according to claim 10, wherein the vegetable derived glycolipid is added between the cooking and ricing operations.

12. A method according to any one of claims 9 to 11, wherein the vegetable derived glycolipid is recovered from the cleaning, slicing, or transport water used during vegetable processing.

13. A method according to any of one claims 9 to 12, wherein the vegetable derived glycolipid is recovered from the cleaning, slicing, or transport water used during said method.

14. A method according to any one of claims 9 to 13, wherein the vegetable derived glycolipid is mixed with phospholipid derivatives.

15. A method according to any one of claims 9 to 14, wherein at least 0.05% of vegetable derived glycolipid is added relative to the weight of the dehydrated flakes.

EP 1 340 430 A1

European Patent Office

# EUROPEAN SEARCH REPORT

Application Number

EP 03 29 0363

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | W.F.TALBURT, O.SMITH: "Potato Processing" 1975, , AVI , USA XP002222051 | 1-5 | A23L1/2165 A23L1/212 A23L1/164 A23L1/0522 |
| Y | Pages 463-481, 505 * page 505, paragraph 5 * * page 472; figure 78 * | 9-15 | |
| Y | FR 2 400 552 A (LARSSON KARE) 16 March 1979 (1979-03-16) * the whole document * | 9-15 | |
| X | ALEXANDRIDIS N ET AL: "Lipid changes during processing and storage of sweet potato flakes." JOURNAL OF FOOD SCIENCE 1979 DEP. OF FOOD SCI. & TECH., VPI & SU, BLACKSBURG, VIRGINIA 24061, USA, vol. 44, no. 4, pages 1186-1190, XP008010883 * figure 1; tables 1,8 * | 1-5 | |
| X | ACKER L ET AL: "Die Rolle der Stärkelipide unter den Getreidelipiden, ihre Zusammensetzung und ihre Bedeutung für das Backverhalten von Weizenmehlen." GETREIDE, MEHL UND BROT 1982 INST. FÜR LEBENSMITTELCHEMIE, WESTF. WILHELMS-UNIV., PIUSALLEE 7, D-4400 MÜNSTER, FEDERAL REPUBLIC OF GERMANY, vol. 36, no. 11, pages 291-295, XP008010884 * the whole document * | 6-8 | TECHNICAL FIELDS SEARCHED (Int.Cl.7) A23L |
| L | LILJA M ET AL: "Lipid changes during the production of potato granules." FOOD CHEMISTRY 1989 SIK, PO BOX 5401, S-402 29 GÖTEBORG, SWEDEN, vol. 31, no. 4, pages 267-277, XP008010885 * figure 3 * | 1-5 | |

-/--

The present search report has been drawn up for all claims

| Place of search | Date of completion of the search | Examiner |
|---|---|---|
| The Hague | 19 June 2003 | Vuillamy, V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 340 430 A1

| | European Patent Office | EUROPEAN SEARCH REPORT | Application Number EP 03 29 0363 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| L | PUN W H ET AL: "Lipid distribution in potato tubers." POTATO RESEARCH 1980 FOOD SCI. DEP., UNIV. OF ALBERTA, EDMONTON, ALBERTA, CANADA T6G 2N2, vol. 23, no. 1, pages 57-74, XP001128130 * page 57, paragraph 1 * * table 4 * | 1-5 | |
| L | PUN W H ET AL: "Lipids in raw and granulated potatoes." CANADIAN INSTITUTE OF FOOD SCIENCE AND TECHNOLOGY JOURNAL 1978 DEP. OF FOOD SCI., UNIV. OF ALBERTA, EDMONTON, ALBERTA, T6G 2N2, CANADA, vol. 11, no. 3, pages 134-141, XP008010882 * tables 1,3,4 * | 1-5 | |
| A | DATABASE FSTA 'Online! INTERNATIONAL FOOD INFORMATION SERVICE (IFIS), FRANFURT/MAIN, DE; SHUB L P ET AL: "Improvement in consumer quality of dried mashed potatoes." XP002222052 Database accession no. 72-3-11-j1805 * abstract * & KONSERVNAYA I OVOSHCHESUSHIL'NAYA PROMYSHLENNOST' 1971, vol. 1971, no. 11, pages 19-20, | 1,6,9 | TECHNICAL FIELDS SEARCHED (Int.Cl.7) |
| A | US 5 489 340 A (STUTE ROLF ET AL) 6 February 1996 (1996-02-06) * the whole document * | 1,6,8,9 | |
| A | FR 873 396 A (BARRIEU CHARLES-VINCENT) 7 July 1942 (1942-07-07) * the whole document * | 8 | |

The present search report has been drawn up for all claims

| Place of search | Date of completion of the search | Examiner |
|---|---|---|
| The Hague | 19 June 2003 | Vuillamy, V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## ANNEX TO THE EUROPEAN SEARCH REPORT
## ON EUROPEAN PATENT APPLICATION NO.

EP 03 29 0363

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2003

| Patent document cited in search report | | Publication date | Patent family member(s) | | Publication date |
|---|---|---|---|---|---|
| FR 2400552 | A | 16-03-1979 | SE | 417441 B | 16-03-1981 |
| | | | AU | 522378 B2 | 03-06-1982 |
| | | | AU | 3863178 A | 07-02-1980 |
| | | | CA | 1102795 A1 | 09-06-1981 |
| | | | DE | 2834999 A1 | 01-03-1979 |
| | | | FI | 782477 A | 20-02-1979 |
| | | | FR | 2400552 A1 | 16-03-1979 |
| | | | JP | 1401961 C | 28-09-1987 |
| | | | JP | 54052003 A | 24-04-1979 |
| | | | JP | 62006558 B | 12-02-1987 |
| | | | SE | 7709374 A | 20-02-1979 |
| US 5489340 | A | 06-02-1996 | NONE | | |
| FR 873396 | A | 07-07-1942 | NONE | | |

EPO FORM P0459

For more details about this annex : see Official Journal of the European Patent Office, No. 12/82